# FASCICULE DE BREVET EUROPEEN

(11) **EP 1 574 763 B1**
(45) Date de publication et mention de la délivrance du brevet: **08.11.2006**
(21) Numéro de dépôt: 05290438.0
(22) Date de dépôt: 25.02.2005
(51) Int. Cl.: F16K 1/226

(54) **Robinet à arbre sec et son procédé de montage**
Ventil mit abgedichteter Welle und Verfahren zur Montage des Ventils
Valve with sealed shaft and the method of mounting the valve

(30) Priorité: 11.03.2004 FR 0402526
(43) Date de publication de la demande: 14.09.2005
(73) Titulaire: KSB S.A.S, 92230 Gennevilliers (FR)
(72) Inventeur: Larrieu, Lucien, 64220 St Jean Pied de Port (FR); Wattignier, Claude, 33400 Talence (FR)
(74) Mandataire: Eidelsberg, Victor Albert

(56) Documents cités:
- EP-A- 0 905 422
- DE-A- 2 724 007
- FR-A- 2 731 766
- US-A- 3 967 812
- US-A- 4 294 428

## Description

La présente invention se rapporte aux robinets à obturateur décalé. Dans un robinet à obturateur décalé, l'axe de rotation de l'obturateur en forme de disque est décalé par rapport au plan de l'obturateur et est parallèle à ce plan. L'axe de rotation est aussi excentré par rapport à l'axe de la tuyauterie. La combinaison du décalage et de l'excentration réduit le frottement entre le siège (joint) et la portée d'étanchéité lors de l'ouverture et de la fermeture du robinet. Le robinet conserve ainsi ses caractéristiques d'étanchéité après un très grand nombre de manoeuvres, ces caractéristiques restant conformes aux normes et spécifications, les plus exigeantes. C'est pourquoi, on utilise beaucoup les robinets à papillon décalé dans le domaine de la haute pression, ainsi que dans le domaine de l'eau (adduction).

Le document US-A- 3 967 812 décrit un robinet à obturateur décalé conforme au préambule de la revendication 1.

L'obturateur est entraîné en rotation sur un quart de tour par un arbre qui assure en outre la fonctibn de support de l'obturateur quand celui-ci est fermé. A l'opposé de l'arbre se trouve un axe qui joue un rôle identique à celui de l'arbre en tant que support de l'obturateur, mais qui n'est pas menant. Dans le présent mémoire, le mot "arbre" englobe aussi l'axe à l'opposé de l'arbre proprement dit.

Un inconvénient grave de ces robinets à obturateur décalé est que l'arbre est exposé au liquide qui passe dans le robinet, d'autant plus que le liquide est sous haute pression. Or, le traitement de l'eau consiste à traiter les rejets par filtration mécanique et par rééquilibrage en cations et, le cas échéant, apport d'additifs basiques ou acides. Il peut aussi se faire dans l'adduction d'eau potable que des pompages effectués non loin du bord de la mer apportent dans les canalisations de l'eau légèrement salée agressive vis-à-vis des métaux. De plus, pour en assurer la compatibilité avec la consommation humaine, les opérateurs injectent dans l'eau des oxydants sous la forme d'ozone et/ou d'eau de javel. L'eau potable contient ainsi des oxydants qui, notamment dans les pays où la température peut atteindre 60° C sous abri, ont une forte activité et sont à l'origine d'une corrosion par piqûre sur les métaux ferreux. Le corps et l'obturateur des robinets peuvent être revêtus d'ébonite ou de peinture épaisse mais les arbres et les alésages correspondants ne sont pas protégés si bien que les cahiers des charges spécifient que le matériau de l'arbre en contact avec le fluide doit satisfaire à une valeur minimum déterminée par une grandeur appelée "indice de piqûre". Cet indice de piqûre dépend du pourcentage de chrome, du pourcentage de molybdène et de celui d'azote contenus dans le matériau. Pour satisfaire à cette condition, le choix du matériau pour les arbres est réduit aux aciers inoxydables austénitiques et aux aciers inoxydables austéno-ferritiques encore appelés duplex.

Les premiers ont des caractéristiques mécaniques faibles et les seconds des caractéristiques mécaniques moyennes, si on les compare à celles des aciers inoxydables martensitiques ou à précipitation, ces 2 nuances étant largement utilisées dans les robinets à papillon centré où il n'y a pas de contact entre arbre/axe et produit véhiculé.

Le choix d'une nuance austénitique ou austéno-ferritique conduit à un surdimensionnement des arbres, donc à un surcoût par rapport aux solutions concurrentes (martensitiques et aciers à précipitation) qui ne satisfont pas au critère requis pour l'indice de piqûre.

L'invention supprime radicalement la corrosion de l'arbre par piqûre.

L'invention a donc pour objet un robinet selon la revendication 1.

En prévoyant ainsi un moyen de protection du tronçon de l'arbre et des garnitures d'étanchéité, on empêche le liquide d'arriver au contact de l'arbre et on assure ainsi une protection impeccable vis-à-vis de la corrosion.

On peut prévoir que le moyen de protection soit un manchon entourant une grande partie de l'arbre, c'est-à-dire toute la partie qui est à l'extérieur du moyeu et qui passe dans le passage d'arbre ménagé dans le corps. Mais cette solution est coûteuse et on lui préfère de beaucoup une solution dans laquelle le moyen de protection est un tronçon entourant le tronçon de l'arbre, qui ne s'étend donc que sur le tronçon de l'arbre s'étendant entre le corps et le moyeu. La pièce rajoutée au robinet traditionnel est ainsi petite en n'en grève pas beaucoup le coût.

De préférence, le manchon comporte une gorge périphérique d'assouplissement qui lui permet de suivre les déformations relatives sous l'effet de la pression des pièces sur lesquelles il est centré. Cette gorge peut aussi, par la possibilité de déplacement à l'aide d'un outil qu'elle offre, faciliter le montage du robinet en rendant plus sûr la mise en place du manchon.

Le manchon peut comporter aussi une rainure périphérique comprise entre un premier logement pour la première garniture et un deuxième logement pour la deuxième garniture. La rainure est plus près du deuxième logement que du premier logement et est destinée à recevoir un jonc élastique venant en butée sur la partie radialement la plus à l'extérieur du moyeu lorsque le manchon est en position. Le jonc élastique empêche ainsi le manchon de retomber hors de la position dans laquelle il assure l'étanchéité.

Suivant un autre mode de réalisation, le moyen de protection est un revêtement de surface du tronçon, notamment un chromage. Le moyen de protection peut être aussi une frette rapportée sur le tronçon.

Grâce à l'invention, on peut constituer l'arbre en acier inoxydable martensitique et donc lui donner un diamètre plus petit, tout en ayant une bonne résistance mécanique, mais sans crainte qu'il ne se rompe sous l'effet de piqûres de corrosion.

Le procédé de montage d'un robinet suivant l'invention consiste à enfiler un manchon muni d'une première et d'une deuxième garnitures d'étanchéité et d'un jonc élastique dans un alésage ménagé sur la face extérieure du moyeu de l'obturateur de façon à ce que le jonc élastique reste en dehors de l'alésage sur la face extérieure du moyeu, à mettre l'obturateur en position dans le corps en l'introduisant alors que le disque est en avant jusqu'à ce que l'alésage du moyeu de l'obturateur soit aligné avec le passage d'arbre ménagé dans le corps et à faire passer l'arbre dans le passage d'arbre et dans l'alésage du moyeu. On peut ainsi monter le dispositif préféré suivant l'invention de protection sous la forme d'un manchon en tirant parti du fait que l'air comprimé par l'arbre dans l'alésage du moyeu lors du montage repousse automatiquement en place le manchon.

Pour être encore plus sûr de la bonne mise en place du manchon, on le déplace vers l'extérieur dans la direction longitudinale de l'arbre jusqu'à ce que la première garniture vienne en contact avec le corps et jusqu'à ce que le jonc vienne dans la rainure du manchon, ce déplacement pouvant s'effectuer à l'aide d'un outil engagé dans la gorge d'assouplissement qui sert ainsi aussi à assurer la mise en position définitive du manchon.

Aux dessins annexés, donnés uniquement à titre d'exemple :

la figure 1 est une vue en coupe d'un robinet à papillon décalé suivant l'invention entre deux brides de tuyauterie,

la figure 2 est une vue à plus grande échelle d'une partie de la figure 1 avec vue agrandie de la partie entourée d'un ovale, la partie droite de la figure représentant le manchon avant qu'il ait atteint sa position définitive de montage et la partie gauche représentant le manchon en position définitive de montage.

les figures 3 et 4 sont des vues semblables à celle de la figure 2 illustrant des variantes de l'invention.

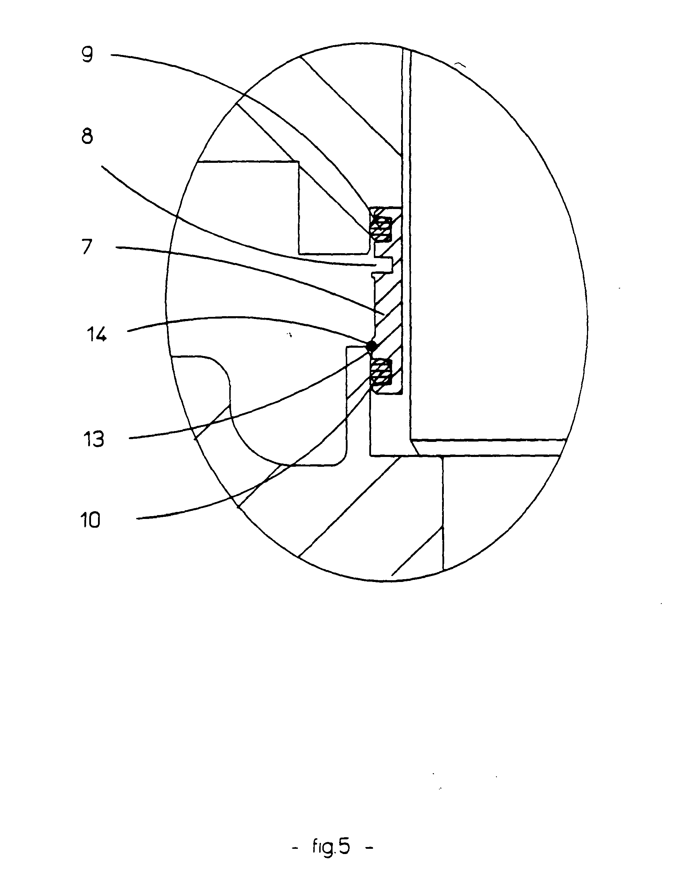

La figure 5 reprend à plus grande échelle la partie entourée d'un ovale de la figure 2.

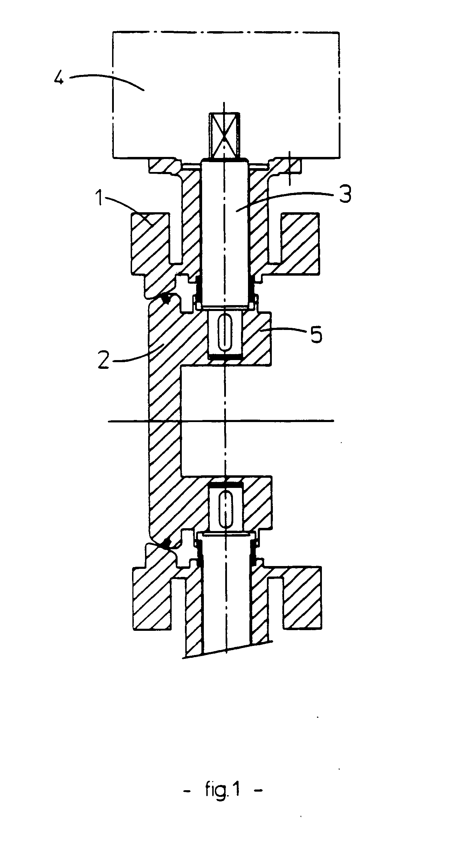

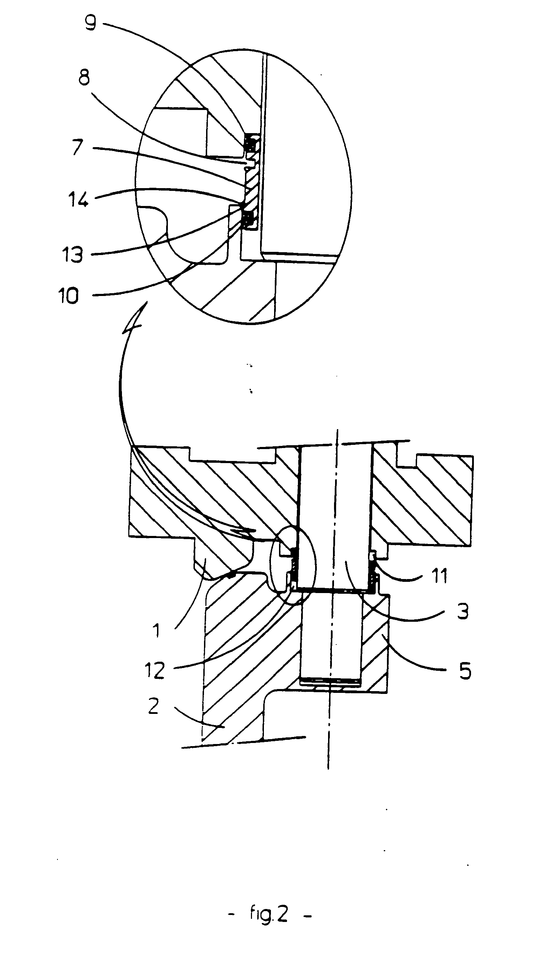

Le robinet représenté aux figures 1 et 2 est le mode de réalisation préféré de beaucoup suivant l'invention. Le robinet à obturateur décalé suivant l'invention est monté à la figure 1 entre deux brides d'une tuyauterie. Le robinet comporte essentiellement un corps 1 tubulaire cylindrique et un obturateur 2 en forme de disque monté tournant par rapport à un arbre 3 décalé par rapport au plan de l'obturateur et parallèle à ce plan. En faisant tourner l'arbre, on fait tourner l'obturateur qui en est solidaire et on ferme ou on dégage l'ouverture du corps tubulaire en mettant ainsi ou non en communication les deux tronçons de la tuyauterie. Un actionneur 4 permet de faire tourner l'arbre 3. L'arbre 3 est également décentré par rapport à l'axe de la tuyauterie c'est-à-dire du corps. L'obturateur comporte d'un seul tenant avec le disque un moyeu 5 dans lequel est ménagé un passage d'arbre. La surface extérieure du tronçon 3 s'étendant entre le corps 1 et le moyeu 5 est munie d'un manchon 7 servant de moyen de protection vis-à-vis de la corrosion.

Le manchon 7 de section transversale circulaire est en un matériau résistant à la corrosion par piqûre tel qu'en acier inoxydable austénitique ou inoxydable austéno-ferritique. Il pourrait être aussi en une matière plastique, telle qu'en Téflon, résistant à la pression. Le manchon comporte une gorge 8 périphérique en diminuant l'épaisseur, de sorte qu'il peut mieux se déformer sous l'action des forces de pression et suivre un éventuel décentrage de l'arbre 3 par rapport à l'obturateur 2. L'épaisseur du manchon à fond de gorge est de 3 mm. D'une manière générale, cette épaisseur peut être comprise entre 1 et 5 mm en général. Aux deux extrémités du manchon 7, sont prévus deux logements de réception d'une première garniture 9 d'étanchéité annulaire et d'une deuxième garniture 10 d'étanchéité annulaire. A l'état monté, la première garniture 9 d'étanchéité vient en appui avec un épaulement 11 du corps 1 et empêche ainsi le fluide remonter le long de l'arbre 3. La deuxième garniture 10 d'étanchéité qui comme la première est réalisée sous la forme d'un joint torique vient en contact avec un alésage 12 circulaire du moyeu 5. Entre le premier logement pour la première garniture 9 et le deuxième logement pour la deuxième garniture 10 et plus près du deuxième logement que du premier est ménagé dans le manchon 7 une rainure 13 périphérique dans lequel vient se loger, lorsque le manchon 7 est à l'état monté comme représenté dans la partie gauche de la figure 2, un jonc 14 élastique qui joue le rôle de butée sur la face supérieure la plus à l'extérieur suivant la direction longitudinale de l'axe de l'alésage 12. Ce jonc 14 retient ainsi en place le manchon 7. A l'état monté, la deuxième garniture 10 d'étanchéité empêche du liquide de passer le long de l'arbre 3 entre moyeu 5 de l'obturateur et l'arbre 3.

Pour monter ce robinet on enfonce à l'établi le manchon 7 dans l'alésage 12, de façon à ce que le jonc 14 reste en dehors de l'alésage 12 sur la face extérieure du moyeu 5. Puis on met l'obturateur 2 en position dans le corps 1, alors que le disque 2 se trouve en avant jusqu'à ce que l'alésage 12 du moyeu 5 de l'obturateur soit aligné avec le passage d'arbre ménagé dans le corps 1. Ensuite, on fait passer l'arbre 3 dans le passage d'arbre et dans l'alésage 12 du moyeu 5. Grâce à ce montage, on peut se contenter d'un manchon 7 d'une longueur courte pour assurer l'étanchéité.

Par souci de sécurité, on peut déplacer vers l'extérieur dans la direction longitudinale de l'arbre 3, le manchon 7 jusqu'à ce que la première garniture 9 vienne en contact avec le corps 1 et le jonc 14 est alors mis en place dans la rainure 13 du manchon 7, en déplaçant le manchon 7 à l'aide d'un outil engagé dans la gorge 8.

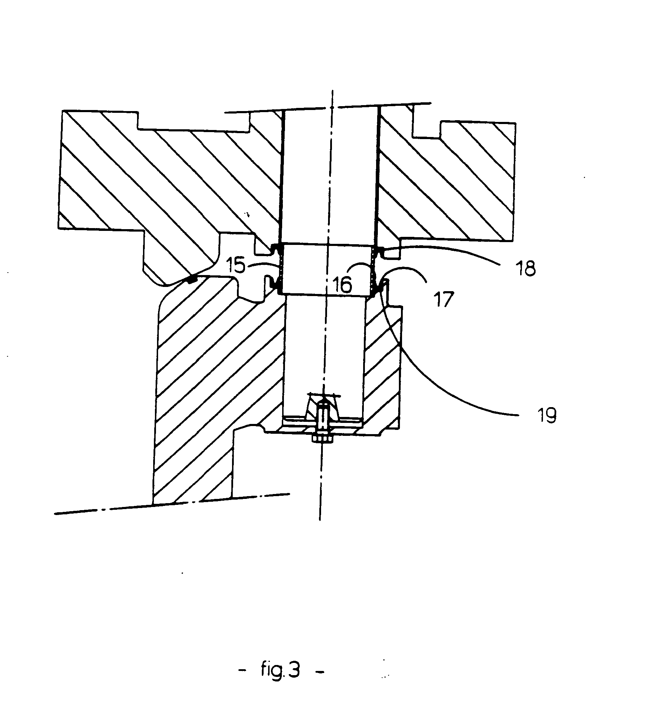

A la figure 3, le tronçon de l'arbre se trouvant entre le corps et le moyeu est entouré d'une frette 15 en acier résistant à la corrosion. Aux deux extrémités de la frette, s'applique respectivement un joint annulaire de section transversale en forme de U, l'une des branches 16 du U s'appliquant à la frette et l'autre branche 17 s'appliquant respectivement à un épaulement 18 du corps et à un alésage 19 du moyeu.

Au lieu de la frette 15, on pourrait aussi appliquer un revêtement résistant à la corrosion.

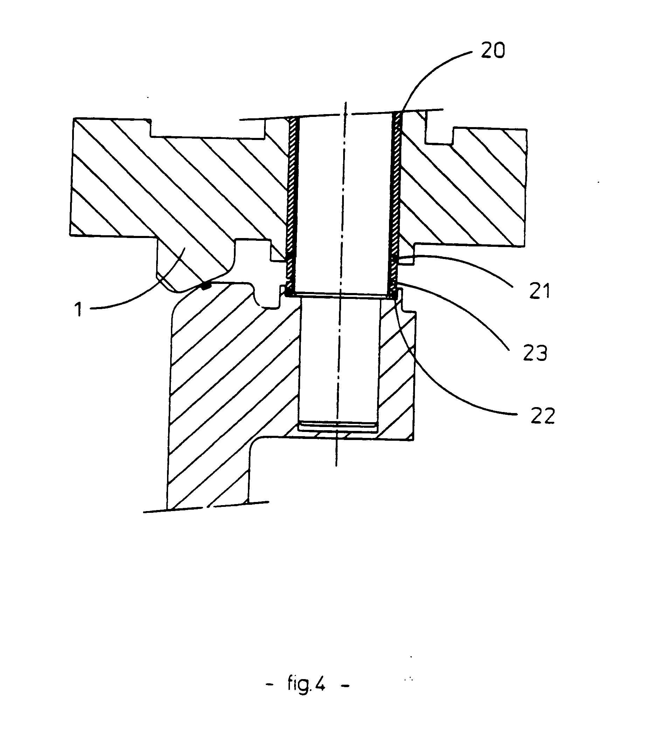

Le mode de réalisation de la figure 4, plus coûteux mais plus simple à monter, comprend un manchon 20 s'étendant sur tout le passage d'arbre ménagé dans le corps et comportant deux garnitures 21, 22 d'étanchéité coopérant respectivement avec le corps et avec l'alésage du moyeu de l'obturateur. Il est prévu également, entre les deux garnitures, une gorge 23 d'assouplissement.

## Revendications

1. Robinet comprenant un corps (1) tubulaire cylindrique dont l'ouverture peut être obturée par un obturateur (2) en forme de disque solidaire en rotation d'un arbre (3), s'étendant de manière décalée par rapport au plan de l'obturateur (2) et parallèlement à ce plan, par l'intermédiaire d'un moyeu (5) d'un seul tenant avec l'obturateur (2), dans lequel la surface extérieure du tronçon de l'arbre (3), s'étendant entre le corps (1) et le moyeu (5), est munie d'un manchon (7) de protection vis-à-vis de la corrosion et il est prévu une première garniture (9) d'étanchéité entre le corps (1) et le manchon (7) et une deuxième garniture (10) d'étanchéité entre l'obturateur (2) et le manchon (7), **caractérisé en ce que** le manchon (7) comporte une rainure (13) périphérique comprise entre un premier logement pour la première garniture (9) et un deuxième logement pour la deuxième garniture (10), plus près du deuxième logement que du premier et destinée à recevoir un jonc (14) élastique venant en butée sur la partie radialement la plus extérieure du moyeu (5).

2. Robinet suivant la revendication 2, **caractérisé en ce que** le manchon (7) comporte une gorge (8) d'assouplissement.

3. Robinet suivant l'une des revendications 1 ou 2, **caractérisé en ce que** le manchon (7) ne s'étend que sur le tronçon de l'arbre (3) s'étendant entre le corps (1) et le moyeu (5).

4. Robinet suivant l'une des revendications précédentes, **caractérisé en ce que** l'arbre est en un acier inoxydable martensitique.

5. Procédé de montage d'un robinet comprenant un corps (1) tubulaire cylindrique dont l'ouverture peut être obturée par un obturateur (2) en forme de disque solidaire en rotation d'un arbre (3) s'étendant de manière décalée par rapport au plan de l'obturateur (2) et parallèlement à ce plan, par l'intermédiaire d'un moyeu (5) d'un seul tenant avec l'obturateur (2), **caractérisé en ce que**, successivement :
- on enfile un manchon (7) muni d'une première et d'une deuxième garnitures (9, 10) d'étanchéité et d'un jonc (14) élastique dans un alésage (12) ménagé sur la face extérieure du moyeu (5) de l'obturateur (2) de façon à ce que le jonc (14) élastique reste en dehors de l'alésage (12) sur la face extérieure du moyeu (5),
- on met l'obturateur (2) en position dans le corps (1) en l'introduisant alors que le disque est en avant jusqu'à ce que l'alésage (12) du moyeu (5) de l'obturateur (2) soit aligné avec le passage d'arbre ménagé dans le corps (1), et
- on fait passer l'arbre (3) dans le passage d'arbre et dans l'alésage (12) du moyeu (5).

6. Procédé suivant la revendication 5, **caractérisé en ce qu'**après avoir effectué les stades énumérés à la revendication 5, on déplace vers l'extérieur, dans la direction longitudinale de l'arbre (3), le manchon (7) jusqu'à ce que la première garniture (9) vienne en contact avec le corps (1) et jusqu'à ce que le jonc (14) vienne dans une rainure (13) du manchon.

## Claims

1. Valve comprising a cylindrical tubular body (1) whose aperture can be blocked by a closure vane (2) in the form of a disc fixed with respect to rotation to a shaft (3), extending in an offset way with respect to the plane of the closure vane (2) and parallel to this plane, by means of a hub (5) made in one piece with the closure vane (2), in which the outer surface of the portion of the shaft (3) extending between the body (1) and the hub (5) is provided with a sleeve (7) for protection from corrosion, and a first sealing gasket (9) is provided between the body (1) and the sleeve (7) and a second sealing gasket (10) is provided between the closure vane (2) and the sleeve (7), **characterized in that** the sleeve (7) has a peripheral groove (13) which is located between a first housing for the first gasket (9) and a second housing for the second gasket (10), nearer to the second housing than to the first housing, and is intended to receive a resilient ring (14) bearing on the radially outermost part of the hub (5).

2. Valve according to Claim 2, **characterized in that** the sleeve (7) has a groove (8) to reduce its stiffness.

3. Valve according to one of Claims 1 and 2, **characterized in that** the sleeve (7) extends only over the portion of the shaft (3) extending between the body (1) and the hub (5).

4. Valve according to one of the preceding claims, **characterized in that** the shaft is made from a martensitic stainless steel.

5. Method for fitting a valve comprising a cylindrical tubular body (1) whose aperture can be blocked by a closure vane (2) in the form of a disc fixed with respect to rotation to a shaft (3), extending in an offset way with respect to the plane of the closure vane (2) and parallel to this plane, by means of a hub (5) made in one piece with the closure vane (2), **characterized in that**, in succession,
- a sleeve (7) provided with a first and a second sealing gasket (9, 10) and a resilient ring (14) is fitted into a bore (12) formed on the outer face of the hub (5) of the closure vane (2) in such a way that the resilient ring (14) remains outside the bore (12) on the outer face of the hub (5),
- the closure vane (2) is placed in position in the body (1) by inserting it when the disc is at the front until the bore (12) of the hub (5) of the closure vane (2) is aligned with the shaft passage formed in the body (1), and
- the shaft (3) is passed into the shaft passage and into the bore (12) of the hub (5).

6. Method according to Claim 5, **characterized in that**, after the stages described in Claim 5 have been completed, the sleeve (7) is moved outwards in the longitudinal direction of the shaft (3), until the first gasket (9) comes into contact with the body (1) and until the ring (14) enters a groove (13) of the sleeve.

## Patentansprüche

1. Ventil, enthaltend einen zylindrischen Rohrkörper (1), dessen Öffnung durch eine scheibenförmige Absperrvorrichtung (2) verschlossen werden kann, die mit einer Welle (3) drehfest verbunden ist, welche gegenüber der Ebene der Absperrvorrichtung (2) versetzt und parallel zu dieser Ebene über eine Nabe (5) verläuft, die mit der Absperrvorrichtung (2) zusammenhängt, bei dem die äußere Fläche der zwischen Körper (1) und Nabe (5) verlaufenden Welle (3) mit einer Korrosionsschutzhülse (7) versehen ist und eine erste Abdichtleiste (9) zwischen dem Körper (1) und der Hülse (7) und eine zweite Abdichtleiste (10) zwischen der Absperrvorrichtung (2) und der Hülse (7) vorgesehen ist, ***dadurch gekennzeichnet, dass*** die Hülse (7) eine erste Umfangsnut (13) zwischen einer ersten Lagerstelle für die erste Leiste (9) und einer zweiten Lagerstelle für die zweite Leiste (10) aufweist, die näher an der ersten als an der zweiten Lagerstelle gelegen und dazu bestimmt ist, einen elastischen Ring (14) aufzunehmen, der auf der radial äußersten Partie der Nabe (5) in Anschlag kommt.

2. Ventil nach Anspruch 1, ***dadurch gekennzeichnet, dass*** die Hülse (7) eine Weichmachernut (8) umfasst.

3. Ventil nach einem der Ansprüche 1 oder 2, ***dadurch gekennzeichnet, dass*** sich die Hülse nur auf den Abschnitt der Welle (3) erstreckt, der zwischen dem Körper (1) und der Nabe (5) gelegen ist.

4. Ventil nach einem der vorherigen Ansprüche, ***dadurch gekennzeichnet, dass*** die Welle aus korrosionsbeständigem Martensitstahl ist.

5. Montageverfahren für ein Ventil, enthaltend einen zylindrischen Rohrkörper (1), dessen Öffnung durch eine scheibenförmige Absperrvorrichtung (2) verschlossen werden kann, die mit einer Welle (3) drehfest verbunden ist, welche gegenüber der Ebene der Absperrvorrichtung (2) und parallel zu dieser Ebene über eine mit der Absperrvorrichtung (2) zusammenhängende Nabe (5) verläuft, ***dadurch gekennzeichnet, dass*** man nacheinander:
- eine mit einer ersten und zweiten Abdichtleiste (9,10) und einem elastischen Ring versehene Hülse (7) so in eine auf der äußeren Seite der Nabe (5) der Absperrvorrichtung (2) ausgesparte Bohrung (12) einführt, **dass** der elastische Ring (14) außerhalb der Bohrung (12) auf der äußeren Seite der Nut (5) bleibt,
- die Absperrvorrichtung (2) im Körper (1) in Position bringt, indem man sie, während die Scheibe vorne ist, solange einführt, bis die Bohrung (12) der Nut (5) der Absperrvorrichtung (2) mit der im Körper (1) ausgesparten Wellendurchführung fluchtet,
- die Welle (3) durch die Wellenführung und in die Bohrung (12) der Nut (5) führt.

6. Verfahren nach Anspruch 5, ***dadurch gekennzeichnet, dass*** man, nachdem man nach Durchführung der Anspruch 5 aufgezählten Schritte die Hülse (7) in Längsrichtung der Welle (3) solange nach außen verschiebt, bis die erste Abdichtleiste (9) in Kontakt mit dem Körper (1) und der Ring (14) in die Nut (13) der Hülse gelangt.
